# EUROPÄISCHE PATENTSCHRIFT

(11) **EP 3 957 522 B1**
(45) Veröffentlichungstag und Bekanntmachung des Hinweises auf die Patenterteilung: **08.03.2023**
(21) Anmeldenummer: 21181096.5
(22) Anmeldetag: 23.06.2021
(51) Int. Cl.: B60Q 1/24, B60Q 1/14, B60Q 1/00

(54) **LANDWIRTSCHAFTLICHE ARBEITSMASCHINE SOWIE VERFAHREN ZU DEREN BETRIEB**
AGRICULTURAL WORK MACHINE AND METHOD FOR OPERATING SAME
MACHINE AGRICOLE, AINSI QUE SON PROCÉDÉ DE CONTROLE

(30) Priorität: 20.08.2020 DE 102020121853
(43) Veröffentlichungstag der Anmeldung: 23.02.2022
(73) Patentinhaber: CLAAS Selbstfahrende Erntemaschinen GmbH, 33428 Harsewinkel (DE)
(72) Erfinder: Tepper, Andreas, 48231 Warendorf (DE); Grevinga, Markus, 48369 Saerbeck (DE); Heydekorn, Jens, 33428 Harsewinkel (DE); Losch, Michael, 33775 Versmold (DE)
(74) Vertreter: CLAAS Gruppe

(56) Entgegenhaltungen:
- EP-A1- 2 158 799
- EP-A1- 2 172 366
- EP-A1- 3 363 684
- EP-A2- 2 402 213
- US-A- 5 442 527
- US-A1- 2014 258 928
- US-A1- 2020 031 270

## Beschreibung

Die vorliegende Anmeldung betrifft eine selbstfahrende landwirtschaftliche Arbeitsmaschine. Weiterhin betrifft die vorliegende Anmeldung ein Verfahren zum Betrieb einer solchen Arbeitsmaschine.

Die Arbeitsmaschine, die insbesondere von einem Schlepper, einem Häcksler oder von einem Mähdrescher gebildet sein kann, umfasst eine Mehrzahl von Beleuchtungsmitteln, mittels derer zumindest Teile eines Umgebungsbereichs der Arbeitsmaschine und/oder Teile der Arbeitsmaschine selbst ausgeleuchtet werden können. Bei den Beleuchtungsmitteln kann es sich insbesondere um Strahler handeln, die verteilt an einem Fahrgestell der Arbeitsmaschine angeordnet sind. Hierbei ist es gleichermaßen denkbar, dass die Beleuchtungsmittel klassische Leuchtkörper, LEDs oder andere Leuchtmittel aufweisen. Ebenfalls sind gleichermaßen starre sowie bewegbare Beleuchtungsmittel denkbar.

Die Arbeitsmaschine umfasst ferner mindestens eine Steuerungseinrichtung, die mit den Beleuchtungsmitteln in Wirkverbindung steht. Die Steuerungseinrichtung ist auf diese Weise dazu geeignet, die Beleuchtungsmittel gemeinsam oder einzeln anzusteuern. Dies betrifft insbesondere eine Aktivierung oder Deaktivierung der Beleuchtungsmittel.

Schließlich umfasst die Arbeitsmaschine ferner eine Eingabevorrichtung, mittels der ein Bediener Eingaben betreffend die Aktivierung und/oder Deaktivierung von Beleuchtungsmitteln vornehmen kann. Die Eingabevorrichtung steht in Wirkverbindung mit der Steuerungseinrichtung, sodass von dem Bediener über die Eingabevorrichtung getätigte Eingaben an die Steuerungseinrichtung übertragbar und mittels dieser in entsprechende Steuerbefehle zur Ansteuerung der Beleuchtungsmittel umsetzbar sind. Hierbei ist es vorstellbar, dass die Eingabevorrichtung und die Steuerungseinrichtung mittels einer körperlichen Kommunikationsleitung miteinander verbunden sind, sodass Informationen betreffend getätigte Eingaben und dergleichen austauschbar sind. Gleichermaßen ist eine drahtlose Verbindung denkbar. Dies betrifft ebenfalls die Verbindung der Steuerungseinrichtung mit den einzelnen Beleuchtungsmitteln.

Arbeitsmaschinen der vorstehend beschriebenen Art sind im Stand der Technik bereits bekannt. Hierzu wird insbesondere auf das europäische Patent EP 2 158 799 A1 verwiesen. Die genannte Schrift schlägt vor, Beleuchtungsmittel in Abhängigkeit von Betriebssituationen der Arbeitsmaschine automatisch zu steuern. Demzufolge ist es beispielsweise vorstellbar, dass der Bediener der Arbeitsmaschine einer bestimmten Betriebssituation, beispielsweise einer in einem Vorgewendebereich eines Feldes ausgeführten Wende, bestimmte Beleuchtungsmittel zuweist, die automatisch aktiviert bzw. deaktiviert werden sollen, sobald und solange die jeweilige Betriebssituation vorliegt. Auf diese Weise wird eine Automatisierung der Steuerung der Beleuchtungsmittel erzielt, bei der für jede Betriebssituation nur solche Beleuchtungsmittel genutzt werden, die für den Bediener tatsächlich Vorteile mit sich bringen. Der Bediener muss sich nicht im Einzelnen um die Schaltung der Beleuchtungsmittel kümmern.

Die Möglichkeiten zur Ansteuerung von Beleuchtungsmitteln haben sich im Stand der Technik insoweit als nachteilig erwiesen, als der Bediener der Arbeitsmaschine bei einer manuellen Aktivierung und/oder Deaktivierung von Beleuchtungsmitteln stets iterativ vorgehen muss, bis er für einen jeweiligen Ausleuchtungswunsch die geeignete Kombination aktivierter Beleuchtungsmittel gefunden hat. Hierbei werden die Aktivierung und Deaktivierung der Beleuchtungsmittel typischerweise isoliert bzw. unabhängig voneinander vorgenommen. Der Bediener muss über einen Lernzeitraum hinweg erst lernen, welche Beleuchtungsmittel welche Ausleuchtung bewirken, sodass er zielgenau einer bestimmten Situation angepasst bestimmte Beleuchtungsmittel aktivieren und andere ggf. deaktivieren kann.

Der vorliegenden Anmeldung liegt nunmehr die Aufgabe zugrunde, eine Arbeitsmaschine bereitzustellen, mittels der eine Ausleuchtungssituation eines Umgebungsbereichs der Arbeitsmaschine und/oder von Teilen der Arbeitsmaschine selbst leichter steuerbar ist.

Die zugrunde liegende Aufgabe wird erfindungsgemäß mittels einer Arbeitsmaschine mit den Merkmalen des Anspruchs 1 gelöst. Vorteilhafte Ausgestaltungen ergeben sich aus den zugehörigen Unteransprüchen.

Die Eingabevorrichtung weist eine interaktive Bedienoberfläche auf, die dazu eingerichtet ist, dass der Bediener mittels Interaktion mit einem Bereich auf der Bedienoberfläche einen Ausleuchtungswunsch eingibt. Hierbei ist die Steuerungseinrichtung dazu eingerichtet, den eingegebenen Ausleuchtungswunsch in eine selektive Aktivierung mindestens eines Beleuchtungsmittels, vorzugsweise einer Mehrzahl von Beleuchtungsmitteln, umzusetzen, sodass der Ausleuchtungswunsch umgesetzt wird. Die vorliegende Erfindung folgt mithin einer gegenüber dem Stand der Technik grundlegend anderen Steuerungssystematik, nämlich nicht der Aktivierung und/oder Deaktivierung einzelner Beleuchtungsmittel durch den Bediener, sondern die abstrakte Äußerung eines Ausleuchtungswunschs durch den Bediener, der sodann von der Steuerungseinrichtung in eine Schaltung der Beleuchtungsmittel "übersetzt" wird.

Die so ausgebildete Arbeitsmaschine bringt viele Vorteile mit sich. Insbesondere muss sich der Bediener der Arbeitsmaschine nicht damit befassen, welche Beleuchtungsmittel zur Umsetzung seines jeweiligen Ausleuchtungswunschs geeignet und/oder erforderlich sind; entsprechende Verknüpfungen sind stattdessen auf einem Datenspeicher der Steuerungseinrichtung hinterlegt, die daher basierend auf dem eingegebenen Ausleuchtungswunsch des Bedieners ihrerseits die geeigneten Beleuchtungsmittel ansteuern kann. Dieses Konzept ist insbesondere in Situationen vorteilhaft, in denen der Bediener mit der jeweiligen Arbeitsmaschine nicht vollständig vertraut ist, wie es beispielsweise bei wechselnden Bedienern in größeren Betrieben regelmäßig der Fall sein kann.

Zudem ist es denkbar, dass die Ausstattung der jeweiligen Arbeitsmaschine mit Beleuchtungsmitteln fortwährend verändert wird, beispielsweise durch den Austausch bestimmter Anbaugeräte gegen andere Anbaugeräte, den Austausch oder die Ergänzung von Beleuchtungsmitteln und dergleichen mehr. Somit können verschiedene Anbaugeräte beispielsweise voneinander verschiedene Beleuchtungsmittel aufweisen, die jeweils einen bestimmten Lichtkegel erzeugen und auf diese Weise einen bestimmten Teil des Umgebungsbereichs der Arbeitsmaschine und/oder einen bestimmten Teil der Arbeitsmaschine selbst ausleuchten. Für die Ausführung eines Beleuchtungswunschs sind entsprechend andere Beleuchtungsmittel relevant als mit dem vorherigen Anbaugerät. Entsprechende Daten können einmalig auf der Steuerungseinrichtung hinterlegt werden, sodass diese schließlich bei Äußerung eines konkreten Ausleuchtungswunschs des Bedieners die jeweils verfügbaren Beleuchtungsmittel ansteuert. Der Bediener erspart sich dabei die Lernphase, welche Beleuchtungsmittel letztlich welchen Effekt aufweisen. Auf diese Weise können auch Nachrüstungen von Beleuchtungsmitteln oder ein Austausch einzelner Beleuchtungsmittel gegen andere Beleuchtungsmittel abgebildet werden, ohne dass der Bediener der Arbeitsmaschine im Einzelnen erlernen muss, welche Beleuchtungsmittel zur Erfüllung welches Ausleuchtungswunschs geschaltet werden müssen.

Die Steuerung der Beleuchtungsmittel durch die Steuerungseinrichtung führt überdies dazu, dass stets nur solche Beleuchtungsmittel aktiviert sind, die zur Umsetzung eines jeweiligen Ausleuchtungswunschs auch tatsächlich erforderlich sind. Hierdurch wird der Gesamtenergiebedarf der Arbeitsmaschine, der auf die Beleuchtungsmittel entfällt, auf ein notwendiges Minimum reduziert, während im Stand der Technik der Bediener im Zweifel lieber ein paar Beleuchtungsmittel mehr aktiviert hat, als er für die Erfüllung eines konkreten Ausleuchtungswunschs benötigt hätte.

In einer vorteilhaften Ausgestaltung der erfindungsgemäßen Arbeitsmaschine ist die interaktive Bedienoberfläche der Eingabevorrichtung berührungsempfindlich ausgebildet. Beispielsweise kann die Bedienoberfläche in Form eines kapazitiven Touchscreens vorliegen. Eine solche Bedienoberfläche ist besonders gut dazu geeignet, einen jeweiligen Ausleuchtungswunsch einzugeben. Insbesondere ist es denkbar, dass mittels der Berührung bestimmter Bereiche der Bedienoberfläche bestimmte Ausleuchtungswünsche logisch verknüpft werden, wobei diese Ausleuchtungswünsche auf der Bedienoberfläche grafisch veranschaulicht werden können.

Zusätzlich oder alternativ ist es denkbar, dass die Eingabevorrichtung mindestens eine Gestenerkennung umfasst, mittels der von dem Bediener ausgeführte Gesten erfassbar und zur Weiterleitung an die Steuerungseinrichtung auswertbar sind. Beispielsweise ist es denkbar, dass bestimmte Gesten als Äußerung bestimmter Ausleuchtungswünsche interpretiert werden. Derartige Gesten können im freien Raum oder in Form von Mustern auf einer berührungsempfindlichen Bedienoberfläche eingegeben werden. Vorteilhafterweise umfasst die Eingabevorrichtung zwecks Erfassung von Gesten, insbesondere von Handbewegungen des Bedieners, mindestens eine Kameramodul.

Weiterhin ist es vorstellbar, dass die Eingabevorrichtung mindestens ein Mikrofon aufweist, mittels dessen akustische Signale, insbesondere menschliche Sprache, erfassbar ist. Auf diese Weise kann die Eingabevorrichtung dazu hergerichtet werden, Sprechbefehle zu erfassen, mittels derer die Beleuchtungsmittel effektiv im Sinne einer Sprachsteuerung gesteuert werden können. Die aufgenommene Sprache kann insbesondere mittels der Steuerungseinrichtung ausgewertet und letztlich in Steuerbefehle übersetzt werden.

Weiterhin kann eine solche Ausgestaltung der erfindungsgemäßen Arbeitsmaschine von Vorteil sein, bei der die Eingabevorrichtung mindestens ein Mittel zur optischen Rückmeldung umfasst. Hierbei kann es sich insbesondere um ein Display handeln, mittels dessen Informationen darstellbar sind. Idealerweise ist ein solches Mittel zur optischen Rückmeldung mit der Bedienoberfläche kombiniert bzw. in diese integriert. Beispielsweise ist es denkbar, dass die Eingabevorrichtung eine kombinierte Eingabe/Ausgabe-Einheit aufweist, die zum einen in der Funktion eines Displays zur grafischen Darstellung von Informationen geeignet ist und zum anderen als berührungsempfindliche Bedienoberfläche dient. Hierzu sind beispielsweise Geräte vergleichbar zu handelsüblichen Tablets denkbar. Das jeweilige Mittel zur optischen Rückmeldung ist dazu eingerichtet, dem Bediener eine aktuelle Ausleuchtungssituation des Umgebungsbereichs der Arbeitsmaschine und/oder der Arbeitsmaschine selbst anzuzeigen. Ferner kann sich die Darstellung, die mittels des Mittels vorgenommen wird, in Abhängigkeit verändern. Beispielsweise ist es denkbar, dass dem Bediener eine grafische Repräsentation seines aktuellen Ausleuchtungswunschs angezeigt wird, beispielsweise in Form farblich hervorgehobener Bereiche oder dergleichen.

Hierbei kann es besonders vorteilhaft sein, wenn das Mittel zur optischen Rückmeldung zumindest eine Darstellung der Arbeitsmaschine und/oder des Umgebungsbereichs der Arbeitsmaschine umfasst, die eine Vogelperspektive auf die Arbeitsmaschine bietet. Die Darstellung umfasst vorteilhafterweise weiterhin eine Mehrzahl diskreter Ausleuchtungsbereiche der Arbeitsmaschine und/oder des Umgebungsbereichs derselben. Eine Eingabevorrichtung, die mit einem solchen Mittel zur optischen Rückmeldung ausgestattet ist, ist in ihrer Bedienung besonders komfortabel, da dem Bediener die Ausleuchtungssituation der Arbeitsmaschine unmittelbar grafisch vergegenwärtigt werden kann, inklusive der Darstellung einzelner Ausleuchtungsbereiche, die der Bediener zum Ausdruck eines jeweiligen Ausleuchtungswunschs auswählen kann. Bei Verwendung einer berührungsempfindlichen Bedienoberfläche kann dieses Auswählen besonders komfortabel mittels eines einfachen Antippens des jeweiligen Bereichs erfolgen. Die Bedienung einer solchen Eingabevorrichtung ist für jeden Bediener unabhängig von seinen Vorkenntnissen intuitiv möglich und ohne jegliche Lernkurve ausführbar. Infolge der Auswahl bestimmter Ausleuchtungsbereiche kann sich deren grafische Darstellung verändern, sodass dem Bediener die getroffene Auswahl zurück gespiegelt wird.

Die erfindungsgemäße Arbeitsmaschine weiter ausgestaltend ist die Steuerungseinrichtung frei konfigurierbar, um Beleuchtungsmittel mindestens einem Teil des Umgebungsbereichs der Arbeitsmaschine und/oder einem Teil der Arbeitsmaschine als solcher funktional zuzuordnen. Sofern eine solche Zuordnung vorliegt, wird bei Vorliegen eines jeweiligen Ausleuchtungswunschs des Bedieners betreffend den jeweils betroffenen Teil des Umgebungsbereichs bzw. des Teils der Arbeitsmaschine das jeweilige Beleuchtungsmittel mittels der Steuerungseinrichtung aktiviert. Die Möglichkeit der freien Konfiguration schafft eine besondere Flexibilität im Umgang mit der jeweiligen Arbeitsmaschine, wobei insbesondere zusätzliche Beleuchtungsmittel hinzugefügt und entsprechend konfiguriert oder bestehende Beleuchtungsmittel beispielsweise in ihrer Ausrichtung verändert und mithin die zugeordnete Konfiguration ebenfalls verändert werden können. Mit anderen Worten kann die Steuerung der Beleuchtungssituation zu jedem Zeitpunkt flexibel an tatsächliche Gegebenheiten betreffend die Beleuchtungsmittel als solche und/oder andere Ausstattungsmöglichkeiten der jeweiligen Arbeitsmaschine angepasst werden.

In einer vorteilhaften Weiterbildung kann ferner mindestens ein Beleuchtungsmittel von einem beweglichen Scheinwerfer gebildet sein, der insbesondere um mindestens eine Schwenkachse verschwenkbar ist. Eine derartige Beweglichkeit ermöglicht es, dass die Steuerung der Beleuchtungsmittel über eine reine Aktivierung und/oder Deaktivierung hinausgeht, wobei insbesondere eine Ausrichtung eines jeweiligen Beleuchtungsmittels veränderbar sein kann. Beispielsweise ist es denkbar, dass der Bediener einen bestimmten Ausleuchtungswunsch äußert, der das Hinzuziehen eines bestimmten Beleuchtungsmittels bei Vorliegen in dessen aktueller Ausrichtung nicht erfordert. Aufgrund der Bewegbarkeit des Beleuchtungsmittels kann dessen Ausrichtung jedoch dahingehend geändert werden, dass die Umsetzung des geäußerten Ausleuchtungswunschs zumindest unterstützt wird. Entsprechend ist es möglich, dass die Steuerungseinrichtung zusätzlich zu der Aktivierung des fraglichen Beleuchtungsmittels ferner dessen Bewegung veranlasst, sodass das Beleuchtungsmittel seine Ausrichtung verändert und daraufhin den Ausleuchtungswunsch des Bedieners unterstützt. Demselben Prinzip folgend ist es ebenfalls denkbar, dass ein einziges Beleuchtungsmittel zur Realisierung verschiedener Ausleuchtungswünsche verwendet wird, die zumindest in aller Regel alternativ auftreten. In einem solchen Szenario kann das jeweilige Beleuchtungsmittel entweder für die Umsetzung der einen Alternative oder der anderen Alternative mittels einer entsprechenden Bewegung ausgerichtet werden, sodass im Ergebnis ein einziges Beleuchtungsmittel zur Umsetzung verschiedener Ausleuchtungswünsche geeignet ist. Für den Bediener ist die Situation besonders komfortabel, da er sich nicht im Einzelnen um eine korrekte Ausrichtung eines jeweiligen Beleuchtungsmittels und dessen Aktivierung bzw. Deaktivierung kümmern muss. Für ihn bleibt es bei der intuitiven Eingabe eines Ausleuchtungswunschs mittels der Eingabevorrichtung.

Weiterhin kann eine solche Arbeitsmaschine von Vorteil sein, bei der die Bedienoberfläche der Eingabevorrichtung von dem Bediener konfigurierbar ist. Dies kann insbesondere das Umschalten zwischen verschiedenen Differenzierungsgraden von Eingabemöglichkeiten umfassen, wobei der Bediener beispielsweise zwischen einem "simpel"-Modus und einem "komplex"-Modus wählen kann. Die verschiedenen Differenzierungsgrade können für verschieden erfahrene Bediener sinnvoll sein, wobei beispielsweise ein noch unerfahrene Bediener im Zweifel die Ausleuchtung des Umgebungsbereichs der Arbeitsmaschine und/oder der Arbeitsmaschine selbst über das eigentlich erforderliche Maß hinaus vornimmt, während ein erfahrener Bediener gezielt Ausleuchtungswünsche äußern kann und hierzu in aller Regel eine geringere Anzahl aktiver Beleuchtungselemente benötigt. Letzteres ist grundsätzlich erstrebenswert, um den Energieverbrauch der Arbeitsmaschine insgesamt zu reduzieren. Die Konfiguration der Bedienoberfläche der Eingabevorrichtung kann ungeachtet dessen das Einstellen individueller Vorlieben ermöglichen, beispielsweise betreffend grafische Darstellungen, Eingabehilfen, Darstellungsgrößen und dergleichen.

In einer weiterhin vorteilhaften Ausgestaltung der erfindungsgemäßen Arbeitsmaschine umfasst selbige mindestens einen Umgebungssensor, mittels dessen zumindest ein Teil des Umgebungsbereichs der Arbeitsmaschine überwachbar ist. Der Umgebungssensor kann insbesondere von einem Kameramodul gebildet sein, mittels dessen eine optische Erfassung des Umgebungsbereichs möglich ist. Alternativ oder zusätzlich sind weitere Arten von Sensoren denkbar, beispielsweise Lasersensoren und/oder Ultraschallsensoren. Ein jeweiliger Umgebungssensor kann dazu verwendet werden, andere Arbeitsmaschinen, die sich im Umfeld der jeweiligen Arbeitsmaschine befinden, zu erfassen und die Ausleuchtungssituation der Arbeitsmaschine entsprechend zu verändern. Beispielsweise ist es denkbar, dass Beleuchtungsmittel automatisch deaktiviert werden, sobald die Gefahr der Blendung des Bedieners einer anderen Arbeitsmaschine erkannt wird. Ebenfalls ist es denkbar, dass eine automatische Anpassung der Ausleuchtungssituation an aktuelle Umweltbedingungen vorgenommen wird. Dies kann beispielsweise im Zuge einer starken Staubentwicklung infolge einer Erntetätigkeit vorteilhaft sein, da Staubpartikel von der Arbeitsmaschine abgestrahltes Licht reflektieren und somit den Bediener der Arbeitsmaschine selbst blenden können. In einer solchen Situation kann es vorteilhaft sein, wenn bestimmte Beleuchtungsmittel automatisch deaktiviert werden, um die Sicht für den Bediener insgesamt zu verbessern.

Die erfindungsgemäße Arbeitsmaschine weiter ausgestaltend ist die Steuerungseinrichtung dazu eingerichtet, einen Ausfall mindestens eines Beleuchtungsmittels zu registrieren und zur Kompensation einer entsprechend ausgefallenen Leuchtleistung, die auf das ausgefallene Beleuchtungsmittel zurückgeht, mindestens ein anderes Beleuchtungsmittel zuzuschalten. Diese Art der Steuerung setzt den Gedanken der Entkopplung von "Ausleuchtungswunsch" und "Aktivierung bestimmter Beleuchtungsmittel" weiter fort. Für den Bediener bleibt es nämlich ungeachtet des Ausfalls des jeweiligen Beleuchtungsmittels dabei, dass sie einen bestimmten Teil des Umgebungsbereichs der Arbeitsmaschine und/oder der Arbeitsmaschine als solcher ausleuchten möchte, hierzu jedoch nicht im Einzelnen selbstständig bestimmte Beleuchtungsmittel schaltet. Letztere Aufgabe liegt bei der Steuerungseinrichtung, die - um dem Ausleuchtungswunsch zu jedem Zeitpunkt optimal nachkommen zu können - entsprechend auch im Falle des Ausfalls eines Beleuchtungsmittels reagieren und andere Wege zur Umsetzung des Ausleuchtungswunschs finden kann. Die Zuschaltung mindestens eines weiteren Beleuchtungsmittels zur Kompensation eines ausgefallenen Beleuchtungsmittels stellt eine solche Möglichkeit dar. Zusätzlich oder alternativ ist es ebenfalls denkbar, dass die Steuerungseinrichtung mindestens ein Beleuchtungsmittel bewegt, insbesondere mittels einer Verschwenkung deren Ausrichtung verändert, um eine ausgefallenen Leuchtleistung eines jeweiligen Beleuchtungsmittels zu kompensieren und auf diese Weise den weiterhin vorliegenden Ausleuchtungswunsch des Bedieners umzusetzen.

Schließlich kann eine solche Arbeitsmaschine vorteilhaft sein, bei der die Eingabevorrichtung mindestens eine von dem Bediener frei konfigurierbares Bedienelement umfasst, das in Zusammenwirkung mit der Steuerungseinrichtung dazu eingerichtet ist, bei einer Bedienung durch den Bediener einen von dem Bediener zuvor definierten Ausleuchtungswunsch einzugeben. Dieser Ausleuchtungswunsch kann insbesondere eine Kombination mehrerer Teile des Umgebungsbereichs der Arbeitsmaschine und/oder mehrerer Teile der Arbeitsmaschine selbst umfassen. Das Bedienelement, das gewissermaßen die Funktion eines "Hotkeys" aufweist, ermöglicht es für jeden Bediener, individuell bestimmte Vorlieben "abzuspeichern" und auf diese Weise je nach Arbeitssituation der Arbeitsmaschine einen womöglich komplexeren Ausleuchtungswunsch nicht jedes Mal individuell neu eingeben zu müssen. Beispielsweise ist es denkbar, dass der Bediener bei einer von einem Mähdrescher gebildeten Arbeitsmaschine in einer bestimmten Betriebssituationen gleichzeitig einen Teil des Schneidwerks sowie einen seitlichen Umgebungsbereich des Mähdreschers ausleuchten möchte, diese Situation jedoch derart häufig für ihn auftritt, dass er diesen Ausleuchtungswunsch nicht in jedem Einzelfall individuell mittels der Eingabevorrichtung neu eingeben möchte. Die Abspeicherung des konkreten Ausleuchtungswunschs im Sinne der Konfiguration des konfigurierbaren Bedienelements erlaubt es dem Bediener entsprechend, mittels der Betätigung des Bedienelements unmittelbar den jeweiligen Ausleuchtungswunsch einzugeben.

Die zugrunde liegende Aufgabe wird ferner in verfahrenstechnischer Hinsicht mittels eines Verfahrens mit den Merkmalen des Anspruchs 14 gelöst.

Das erfindungsgemäße Verfahren ist mittels der erfindungsgemäßen Arbeitsmaschine besonders einfach umsetzbar. Die sich hieraus ergebenden Vorteile sind vorstehend bereits dargelegt. Insbesondere wird ein Bedienungskomfort der Arbeitsmaschine vergrößert und zudem eine nicht nötige Ausleuchtung des Umgebungsbereichs der Arbeitsmaschine bzw. der Arbeitsmaschine selbst vermieden.

Die Erfindung ist nachstehend anhand eines Ausführungsbeispiels, das in den Figuren dargestellt ist, näher erläutert. Es zeigt:
- Fig. 1:: Eine Frontansicht einer landwirtschaftlichen Arbeitsmaschine, die als Schlepper ausgebildet ist,
- Fig. 2:: Eine Draufsicht auf die Arbeitsmaschine gemäß Figur 1,
- Fig. 3:: Ein Querschnitt durch eine weitere Arbeitsmaschine, die als Mähdrescher ausgebildet ist und
- Fig. 4:: Ein schematisches Detail einer Eingabevorrichtung der Arbeitsmaschine gemäß Figur 3.

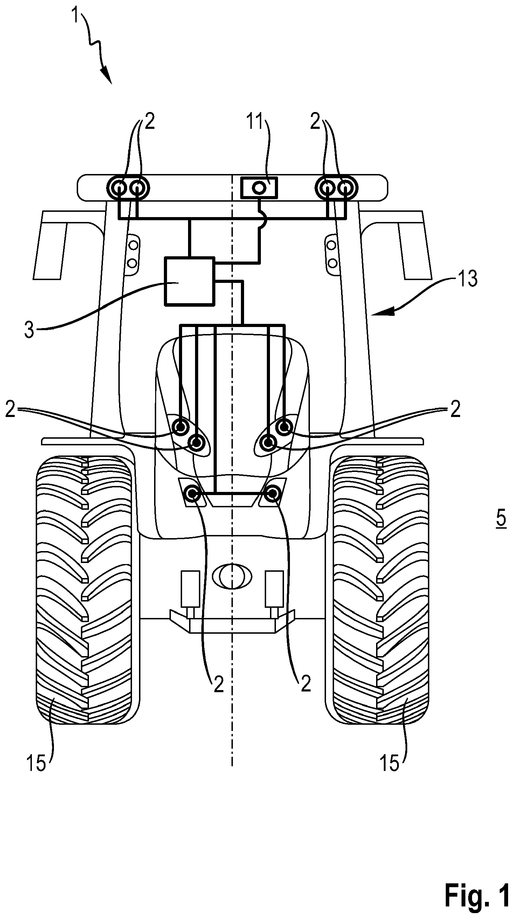

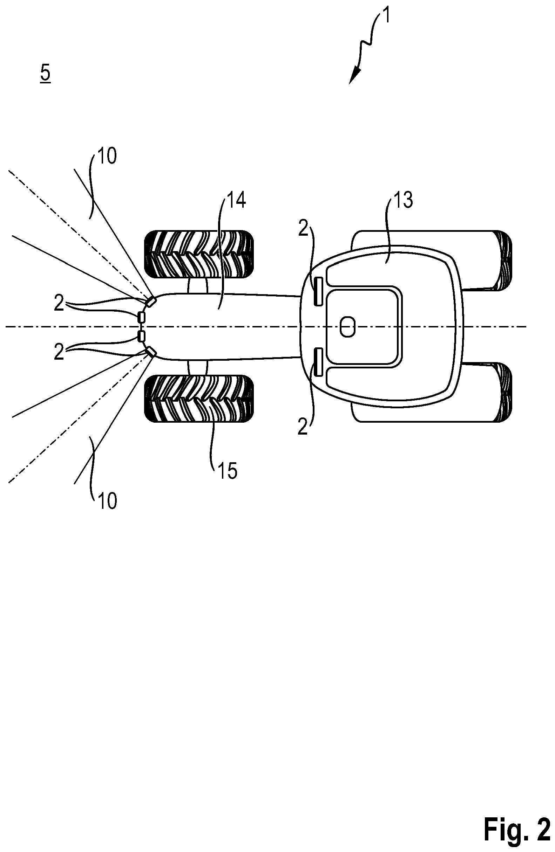

Ein erstes Ausführungsbeispiel, das in den **Figuren 1** **und** **2** gezeigt ist, umfasst eine erfindungsgemäße Arbeitsmaschine **1,** die hier in Form eines Schleppers bzw. Traktors ausgebildet ist. Die Arbeitsmaschine **1** umfasst eine Mehrzahl von Beleuchtungsmitteln **2,** die beispielsweise an einer Fahrerkabine **13** sowie an einem in Fahrtrichtung vorderen Ende einer Motorhaube **14** angeordnet sind. Weitere Beleuchtungsmittel **2,** die in den Figuren nicht dargestellt sind, sind ohne Weiteres denkbar. Die Beleuchtungsmittel **2** haben gemeinsam, dass sie mit einer Steuerungseinrichtung **3** zusammenwirken, die insbesondere eine Datenverarbeitungsanlage umfassen kann. Die Beleuchtungsmittel **2** weisen jeweils einen Lichtkegel **10** auf, in dem sie Licht abstrahlen können.

Die Steuerungseinrichtung **3** wirkt zusätzlich zu den Beleuchtungsmitteln **2** ferner mit einer in den **Figuren 1** **und** **2** nicht gezeigten Eingabevorrichtung **4** zusammen, mittels der ein Bediener der Arbeitsmaschine **1** Eingaben betreffend einen Ausleuchtungswunsch eines Umgebungsbereichs **5** der Arbeitsmaschine **1** und/oder eines Teils der Arbeitsmaschine **1** eingeben kann. Beispielsweise sind die an der Motorhaube **14** angeordneten Beleuchtungsmittel **2** primär zur Ausleuchtung des Umgebungsbereichs **5** eingerichtet, während die an der Fahrerkabine **13** angeordneten Beleuchtungsmittel **2** zumindest auch zum Teil einen Teil der Arbeitsmaschine **1** selbst ausleuchten, nämlich in dem gezeigten Beispiel zumindest einen Teil der Motorhaube **14** sowie von Vorderrädern **15.**

Die gezeigte Arbeitsmaschine **1** umfasst weiterhin einen Umgebungssensor **11,** der hier in Form eines Kameramoduls ausgebildet ist. Der Umgebungssensor **11** ist gleichermaßen mit der Steuerungseinrichtung **3** verbunden, sodass mittels des Umgebungssensors **11** erfasste Daten an die Steuerungseinrichtung **3** leitbar und mittels dieser auswertbar sind. Auf diese Weise ist die Steuerungseinrichtung **3** dazu in der Lage, eine Steuerung der Beleuchtungsmittel **2** unter Berücksichtigung der mittels des Umgebungssensors **11** erfassten Daten entsprechend einem jeweilig vorliegenden Ausleuchtungswunsch des Bedieners vorzunehmen. Die Eingabevorrichtung **4** kann sich insbesondere innerhalb der Fahrerkabine **13** befinden und eine Kombination aus einer berührungsempfindlichen Bedienoberfläche **6** sowie eines als Display ausgeführten Mittels **8** zur optischen Rückmeldung umfassen. Die Eingabevorrichtung **4** ist vorteilhafterweise derart relativ zu einem Fahrersitz der Arbeitsmaschine **1** ausgerichtet, dass der Bediener die Eingabevorrichtung **4** in eine auf dem Fahrersitz sitzenden Position erreichen und somit bedienen kann.

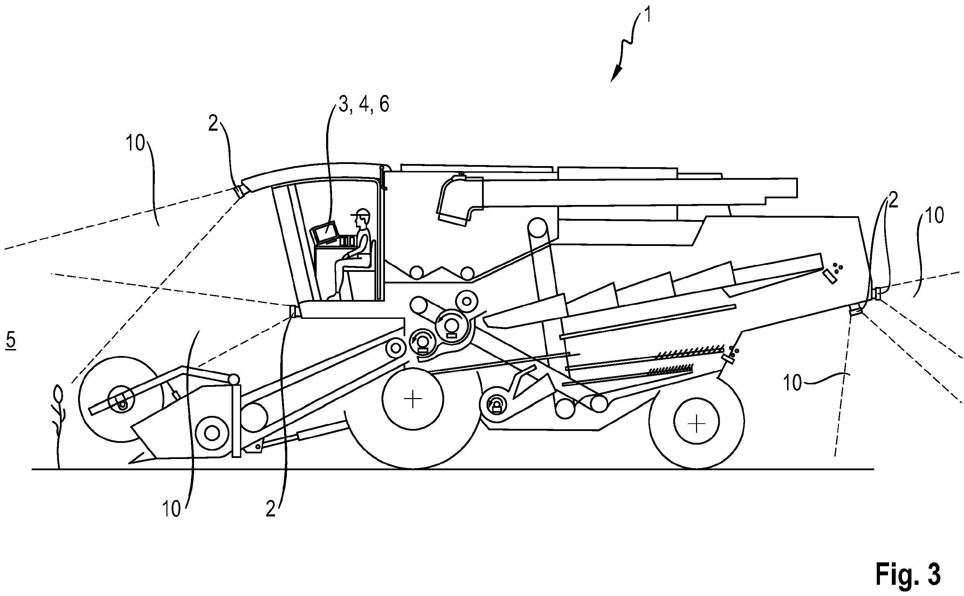

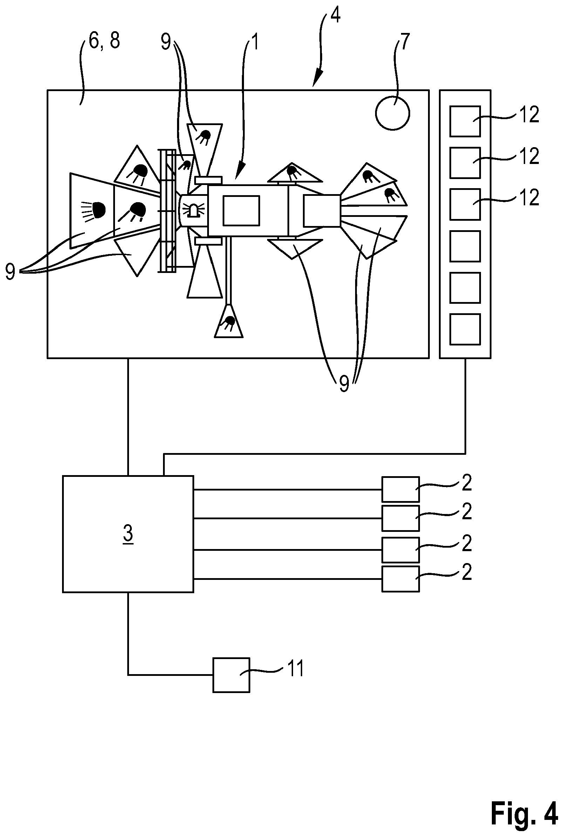

Ein weiteres Ausführungsbeispiel, das sich aus den **Figuren 3** **und** **4** ergibt, umfasst eine als Mähdrescher ausgebildete Arbeitsmaschine **1,** die ebenfalls mit einer Mehrzahl von Beleuchtungsmitteln **2** ausgestattet ist. Hierzu sind in **Figur 3** beispielhaft Beleuchtungsmittel **2** an einem vorderen Ende der Arbeitsmaschine **1** sowie andere Beleuchtungsmittel **2** an einem hinteren Ende der Arbeitsmaschine **1** veranschaulicht. Die einzelnen Beleuchtungsmittel **2** umfassen jeweils einen Lichtkegel **10,** in dem sie Licht abstrahlen können. Wie in dem ersten Ausführungsbeispiel sind die Beleuchtungsmittel **2** mit einer Steuerungseinrichtung **3** verbunden, die in einer Fahrerkabine **13** der Arbeitsmaschine **1** angeordnet ist. Die Steuerungseinrichtung **3** wirkt mit einer Eingabevorrichtung **4** zusammen, die gleichermaßen innerhalb der Fahrerkabine **13** angeordnet ist und eine interaktive Bedienoberfläche **6** umfasst. Mittels dieser ist es dem Bediener der Arbeitsmaschine **1** möglich, einen jeweiligen Ausleuchtungswunsch einzugeben, der sodann an die Steuerungseinrichtung **3** weitergeleitet und mittels der Steuerungseinrichtung **3** derart umgesetzt wird, dass dem Ausleuchtungswunsch entsprechende Teile eines Umgebungsbereichs **5** der Arbeitsmaschine **1** und/oder Teile der Arbeitsmaschine **1** selbst mittels zumindest eines Teils der Beleuchtungsmittel **2** ausgeleuchtet werden.

Die Eingabevorrichtung **4** umfasst in dem gezeigten Beispiel eine berührungsempfindliche Bedienoberfläche **6,** die gleichzeitig ein Mittel **8** zur optischen Rückmeldung in Form eines Displays umfasst. Die Eingabevorrichtung **4** ist beispielhaft in **Figur 4** veranschaulicht. Sie umfasst eine Darstellung der Arbeitsmaschine **1** sowie des Umgebungsbereichs **5** derselben, betrachtet aus einer Vogelperspektive. Ferner veranschaulicht die Eingabevorrichtung **4** eine Mehrzahl von Ausleuchtungsbereichen **9,** die von dem Bediener zur Äußerung eines jeweiligen Ausleuchtungswunschs herangezogen werden können. Somit ist es dem Bediener möglich, einen oder mehrere der Ausleuchtungsbereiche **9** mittels Berührung der berührungsempfindlichen Bedienoberfläche **6** auszuwählen, was sodann als Wunsch interpretiert wird, dass diesen Ausleuchtungsbereiche **9** entsprechende Bereiche der Arbeitsmaschine **1** bzw. ihres Umgebungsbereichs **5** ausgeleuchtet werden sollen. Die entsprechende Information, die mittels des Mittels **8** zur optischen Rückmeldung grafisch an den Bediener gespiegelt werden kann, beispielsweise mittels farblicher Hervorhebung der ausgewählten Ausleuchtungsbereiche **9,** wird an die Steuerungseinrichtung **3** weitergeleitet. Auf einem Datenspeicher der Steuerungseinrichtung **3** sind Informationen hinterlegt, die in jedem Beleuchtungsmittel **2** einen Wirkungsbereich zuordnen dessen Ausleuchtung die jeweiligen Beleuchtungsmittel bewirken. In Kenntnis dieser Information ist die Steuerungseinrichtung **3** dazu geeignet gezielt diejenigen Beleuchtungsmittel **2** zu schalten, die geeignet sind, den Ausleuchtungswunsch des Bedieners umzusetzen. Eine Vorkenntnis seitens des Bedieners, welche Beleuchtungsmittel **2** vorhanden sind, in welchen Positionen an einem Fahrgestell der Arbeitsmaschine **1** sie sich befinden, welcher Ausrichtung sie aufweisen und dergleichen mehr, werden nicht benötigt, sodass die Ausleuchtung der Arbeitsmaschine **1** vollständig intuitiv und ohne jegliche Lernkurve seitens des Bedieners erfolgen kann. Zudem aktiviert die Steuerungseinrichtung **3** gezielt nur solche Beleuchtungsmittel **2,** die zur Erfüllung des Ausleuchtungswunschs auch tatsächlich erforderlich sind. Hierfür nicht erforderliche Beleuchtungsmittel **2** bleiben deaktiviert, sodass der Energieverbrauch zur Ausleuchtung des Umgebungsbereichs **5** bzw. der Arbeitsmaschine **1** als solcher stets minimal ist. Ferner kann der Bediener anhand der Darstellung der Eingabevorrichtung **4** direkt erkennen, welche Ausleuchtungswünsche womöglich nicht umsetzbar sind. Im Stand der Technik würde der Bediener stattdessen womöglich so lange "probieren", verschiedene Beleuchtungsmittel **2** zu schalten, bis er realisiert, dass der Ausleuchtungswunsch nicht umsetzbar ist.

Die Eingabevorrichtung **4** umfasst in dem gezeigten Beispiel ferner ein Kameramodul **7,** dass zur optischen Erfassung von Gesten geeignet ist. Eine solche Ausgestaltung ermöglicht es dem Bediener, einen jeweiligen Ausleuchtungswunsch mittels der Ausführung bestimmter Gesten vorzunehmen. Diese können gleichermaßen eine Berührung der Bedienoberfläche oder eine freie Bewegung im Raum umfassen. Ebenfalls ist es möglich, die Eingabevorrichtung **4** mit mindestens einem Mikrofon auszustatten, mittels dessen Sprachbefehle erfassbar und auf diese Weise Ausleuchtungswünsche eingebbar sind.

In dem gezeigten Beispiel wirkt die Steuerungseinrichtung **3** ferner mit einer Mehrzahl von Bedienelement **12** zusammen, die hier in Form von Tastern ausgebildet sind. Die Bedienelemente **12** sind frei von dem Bediener konfigurierbar, wobei der Bediener einen bestimmten Ausleuchtungswunsch, der beispielsweise aus einer Kombination einer Mehrzahl bestimmter Ausleuchtungsbereiche **9** besteht, abspeichern und für eine zukünftige Verwendung mittels einmaliger Betätigung des jeweiligen Bedienelements **12** eingeben kann. Die Bedienelemente **12** weisen somit jeweils die Funktion eines "Hotkeys" auf.

Schließlich wirkt die Steuerungseinrichtung **3** auch in dem zweiten Ausführungsbeispiel mit einem Umgebungssensor **11** zusammen, der vergleichbar zu dem ersten Ausführungsbeispiel wirken kann, sodass insbesondere zumindest ein Teil des Umgebungsbereichs der Arbeitsmaschine überwachbar ist.

### Bezugszeichenliste

- 1: Arbeitsmaschine
- 2: Beleuchtungsmittel
- 3: Steuerungseinrichtung
- 4: Eingabevorrichtung
- 5: Umgebungsbereich
- 6: Bedienoberfläche
- 7: Kameramodul
- 8: Mittel
- 9: Ausleuchtungsbereich
- 10: Lichtkegel
- 11: Umgebungssensor
- 12: Bedienelement
- 13: Fahrerkabine
- 14: Motorhaube
- 15: Vorderrad

## Patentansprüche

1. Selbstfahrende landwirtschaftliche Arbeitsmaschine (1), umfassend
- eine Mehrzahl von Beleuchtungsmitteln (2),
- eine Steuerungseinrichtung (3) sowie
- eine Eingabevorrichtung (4),
wobei die Beleuchtungsmittel (2) derart verteilt angeordnet sind, dass sie gemeinsam dazu geeignet sind, einen Umgebungsbereich (5) der Arbeitsmaschine (1) und/oder Teile der Arbeitsmaschine (1) zumindest teilweise auszuleuchten,
wobei mittels der Eingabevorrichtung (4) von einem Bediener Eingaben betreffend die Aktivierung und/oder Deaktivierung von Beleuchtungsmitteln (2) vornehmbar sind,
wobei die Steuerungseinrichtung (3) mit der Eingabevorrichtung (4) in Wirkverbindung steht, sodass von dem Bediener über die Eingabevorrichtung (4) getätigte Eingaben an die Steuerungseinrichtung (3) übertragbar sind,
wobei die Steuerungseinrichtung (3) mit den Beleuchtungsmitteln (2) in Wirkverbindung steht, sodass die Beleuchtungsmittel (2) mittels der Steuerungseinrichtung (3) ansteuerbar sind,
**dadurch gekennzeichnet, dass**
die Eingabevorrichtung (4) eine interaktive Bedienoberfläche (6) aufweist, die dazu eingerichtet ist, dass der Bediener mittels Interaktion mit einem Bereich auf der Bedienoberfläche (6) einen Ausleuchtungswunsch eingibt,
wobei die Steuerungseinrichtung (3) dazu eingerichtet ist, den eingegebenen Ausleuchtungswunsch derart in eine selektive Aktivierung mindestens eines der Beleuchtungsmittel (2) umzusetzen, dass der Ausleuchtungswunsch umgesetzt wird, wobei in einem Datenspeicher der Steuereinrichtung (3) Informationen hinterlegt sind, die jedem Beleuchtungsmittel (2) einen Wirkungsbereich zuordnen, dessen Ausleuchtung die jeweiligen Beleuchtungsmittel bewirken und
wobei anhand dieser Informationen die Steuerungseinrichtung (3) eingerichtet ist, gezielt diejenigen Beleuchtungsmittel (2) zu schalten, die geeignet sind, den Ausleuchtungswunsch des Bedieners umzusetzen.

2. Arbeitsmaschine (1) nach Anspruch 1, **dadurch gekennzeichnet, dass** die interaktive Bedienoberfläche (6) berührungsempfindlich ausgebildet ist, insbesondere in Form eines kapazitiven Touchscreens.

3. Arbeitsmaschine (1) nach einem der vorhergehenden Ansprüche, **dadurch gekennzeichnet, dass** die Eingabevorrichtung (6) mindestens eine Gestenerkennung umfasst, wobei vorzugsweise die Eingabevorrichtung (4) mindestens ein Kameramodul (7) zur Erfassung von Handbewegungen des Bedieners aufweist.

4. Arbeitsmaschine (1) nach einem der vorhergehenden Ansprüche, **dadurch gekennzeichnet, dass** die Eingabevorrichtung (4) mindestens ein Mittel (8) zur optischen Rückmeldung umfasst, vorzugsweise in Form eines in die Bedienoberfläche (6) integrierten Displays, wobei das Mittel (8) dazu eingerichtet ist, dem Bediener eine aktuelle Ausleuchtungssituation des Umgebungsbereichs (5) der Arbeitsmaschine (1) und/oder der Arbeitsmaschine (1) anzuzeigen.

5. Arbeitsmaschine (1) nach Anspruch 4, **dadurch gekennzeichnet, dass** das Mittel (8) zur optischen Rückmeldung zumindest eine Darstellung der Arbeitsmaschine (1) und/oder des Umgebungsbereichs (5) der Arbeitsmaschine (1) aus einer Vogelperspektive umfasst, wobei vorzugsweise die Darstellung eine Mehrzahl diskreter Ausleuchtungsbereiche (9) der Arbeitsmaschine (1) und/oder des Umgebungsbereichs (5) anzeigt.

6. Arbeitsmaschine (1) nach Anspruch 4 oder 5, **dadurch gekennzeichnet, dass** das Mittel (8) zur optischen Rückmeldung zumindest eine Darstellung mindestens eines Lichtkegels (10) mindestens eines Beleuchtungsmittels (2) umfasst.

7. Arbeitsmaschine (1) nach einem der vorhergehenden Ansprüche, **dadurch gekennzeichnet, dass** die Steuerungseinrichtung (3) frei konfigurierbar ist, Beleuchtungsmittel (2) mindestens einem Teil des Umgebungsbereichs (5) der Arbeitsmaschine (1) und/oder einem Teil der Arbeitsmaschine (1) funktional zuzuordnen, sodass bei Vorliegen eines Ausleuchtungswunschs des Bedieners betreffend den Teil des Umgebungsbereichs (5) bzw. den Teil der Arbeitsmaschine (1) das jeweilige Beleuchtungsmittel (2) mittels der Steuerungseinrichtung (3) aktiviert wird.

8. Arbeitsmaschine (1) nach einem der vorhergehenden Ansprüche, **dadurch gekennzeichnet, dass** mindestens ein Beleuchtungsmittel (2) von einem beweglichen, insbesondere um mindestens eine Schwenkachse verschwenkbaren, Scheinwerfer gebildet ist.

9. Arbeitsmaschine (1) nach einem der vorhergehenden Ansprüche, **dadurch gekennzeichnet, dass** die Bedienoberfläche (6) von dem Bediener konfigurierbar ist, wobei vorzugsweise ein Differenzierungsgrad von Eingabemöglichkeiten von dem Bediener wählbar ist, vorzugsweise zumindest zwischen einem "simpel"-Differenzierungsgrad und einem "komplex"-Differenzierungsgrad.

10. Arbeitsmaschine (1) nach einem der vorhergehenden Ansprüche, **gekennzeichnet durch** mindestens einen Umgebungssensor (11), mittels dessen zumindest ein Teil des Umgebungsbereichs (5) der Arbeitsmaschine (1) überwachbar ist, insbesondere betreffend Umweltbedingungen und/oder andere Arbeitsmaschinen.

11. Arbeitsmaschine (1) nach Anspruch 10, **dadurch gekennzeichnet, dass** der Umgebungssensor (11) mit der Steuerungseinrichtung (3) in Wirkverbindung steht, sodass mittels der Steuerungseinrichtung (3) in Abhängigkeit eines Signals des Umgebungssensors (11) mindestens ein Beleuchtungsmittel (2) ansteuerbar, insbesondere deaktivierbar, ist.

12. Arbeitsmaschine (1) nach einem der vorhergehenden Ansprüche, **dadurch gekennzeichnet, dass** die Steuerungseinrichtung (3) dazu eingerichtet ist, einen Ausfall mindestens eines Beleuchtungsmittels (2) zu registrieren und zur Kompensation einer damit ausgefallenen Leuchtleistung des jeweiligen Beleuchtungsmittels (2) mindestens ein anderes Beleuchtungsmittel (2) zuzuschalten.

13. Arbeitsmaschine (1) nach einem der vorhergehenden Ansprüche, **dadurch gekennzeichnet, dass** die Eingabevorrichtung (4) mindestens ein von dem Bediener frei konfigurierbares Bedienelement (12) umfasst, das in Zusammenwirkung mit der Steuerungseinrichtung (3) dazu eingerichtet ist, bei einer Bedienung durch den Bediener einen von dem Bediener zuvor definierten Ausleuchtungswunsch einzugeben.

14. Verfahren zum Betrieb einer Arbeitsmaschine (1) nach einem der vorhergehenden Ansprüche,
**dadurch gekennzeichnet, dass**
bei Eingabe eines Ausleuchtungswunschs mittels Interaktion mit der interaktiven Bedienoberfläche (6) der Ausleuchtungswunsch an die Steuerungseinrichtung (3) geleitet wird,
wobei mittels der Steuerungseinrichtung (3) in Abhängigkeit von dem Ausleuchtungswunsch mindestens ein Beleuchtungsmittel (2) aktiviert wird, mittels dessen der Beleuchtungswunsch umgesetzt wird, wobei in einem Datenspeicher der Steuereinrichtung (3) Informationen hinterlegt sind, die jedem Beleuchtungsmittel (2) einen Wirkungsbereich zuordnen, dessen Ausleuchtung die jeweiligen Beleuchtungsmittel bewirken und wobei anhand dieser Informationen die Steuerungseinrichtung (3) eingerichtet ist, gezielt diejenigen Beleuchtungsmittel (2) zu schalten, die geeignet sind, den Ausleuchtungswunsch des Bedieners umzusetzen.

## Claims

1. A self-propelled agricultural working machine (1), comprising
- a plurality of illuminating means (2),
- a control unit (3), as well as
- an input device (4),
wherein the illuminating means (2) are distributed in a manner such that together they are suitable for at least partially illuminating an area (5) of the environment of the working machine (1) and/or portions of the working machine (1),
wherein, by means of the input device (4), inputs can be made by an operator concerning the activation and/or deactivation of illuminating means (2),
wherein the control unit (3) is operatively connected to the input device (4) so that inputs that are input by the operator via the input device (4) can be transmitted to the control unit (3),
wherein the control unit (3) is operatively connected to the illuminating means (2), so that the illuminating means (2) can be controlled by means of the control unit (3),
**characterized in that**
the input device (4) has an interactive operator interface (6) which is configured in a manner such that the operator inputs an illumination request by interacting with a region on the operator interface (6),
wherein the control unit (3) is configured to convert the input illumination request into a selective activation of at least one of the illuminating means (2) in a manner such that the illumination request is implemented, wherein information is stored in a data memory of the control unit (3) which allocates an operational zone to each illuminating means (2) the illumination of which actuates the respective illuminating means and wherein, with the aid of this information, the control unit (3) is configured to specifically switch on those means of the illuminating means (2) which are appropriate for implementing the illumination request of the operator.

2. The working machine (1) according to claim 1, **characterized in that** the interactive operator interface (6) is touch sensitive in configuration, in particular in the form of a capacitive touchscreen.

3. The working machine (1) according to one of the preceding claims, **characterized in that** the input device (6) comprises at least one gesture recognition means, wherein preferably, the input device (4) has at least one camera module (7) for detecting hand movements made by the operator.

4. The working machine (1) according to one of the preceding claims, **characterized in that** the input device (4) comprises at least one means (8) for optical feedback, preferably in the form of a display integrated into the operator interface (6), wherein the means (8) is configured to display to the operator a current illumination situation of the environmental area (5) of the working machine (1) and/or of the working machine (1).

5. The working machine (1) according to claim 4, **characterized in that** the means (8) for optical feedback comprises at least one representation of the working machine (1) and/or of the environmental area (5) of the working machine (1) as a bird's eye view, wherein preferably, the representation displays a plurality of discrete illumination regions (9) of the working machine (1) and/or of the environmental area (5).

6. The working machine (1) according to claim 4 or claim 5, **characterized in that** the means (8) for optical feedback comprises at least one representation of at least one cone of light (10) of at least one illuminating means (2).

7. The working machine (1) according to one of the preceding claims, **characterized in that** the control unit (3) can be freely configured in order to functionally associate illuminating means (2) of at least a portion of the environmental area (5) of the working machine (1) and/or of a portion of the working machine (1) so that when an illumination request is provided by the operator concerning the portion of the environmental area (5) or the portion of the working machine (1), the respective illuminating means (2) is activated by means of the control unit (3).

8. The working machine (1) according to one of the preceding claims, **characterized in that** at least one illuminating means (2) is formed by a movable spotlight which in particular can be pivoted about at least one pivot axis.

9. The working machine (1) according to one of the preceding claims, **characterized in that** the operator interface (6) can be configured by the operator, wherein preferably, a level of differentiation for the input possibilities can be selected by the operator, preferably at least between a "simple" level of differentiation and a "complex" level of differentiation.

10. The working machine (1) according to one of the preceding claims, **characterized by** at least one environmental sensor (11), by means of which at least a portion of the environmental area (5) of the working machine (1) can be monitored, in particular as regards environmental conditions and/or as regards other working machines.

11. The working machine (1) according to claim 10, **characterized in that** the environmental sensor (11) is operatively connected to the control unit (3) so that at least one illuminating means (2) can be controlled, in particular deactivated, by means of the control unit (3) as a function of a signal from the environmental sensor (11).

12. The working machine (1) according to one of the preceding claims, **characterized in that** the control unit (3) is configured so as to register a failure of at least one illuminating means (2) and in order to compensate for the associated failed illuminating power of the respective illuminating means (2), to switch on at least one other illuminating means (2).

13. The working machine (1) according to one of the preceding claims, **characterized in that** the input device (4) comprises at least one operating element (12) which can be freely configured by the operator which is configured, in cooperation with the control unit (3), to input an illumination request which has previously been defined by the operator when operated by the operator.

14. A method for operating a working machine (1) according to one of the preceding claims,
**characterized in that**
when an illumination request is input by means of interaction with the interactive operator interface (6), the illumination request is sent to the control unit (3),
wherein at least one illuminating means (2) is activated by means of the control unit (3) as a function of the illumination request, by means of which the illumination request is implemented, wherein information is stored in a data memory of the control unit (3) which allocates an operational zone to each illuminating means (2) the illumination of which is carried out by the respective illuminating means,
and wherein with the aid of this information, the control unit (3) is configured to specifically switch on those means of the illuminating means (2) which are appropriate for implementing the illumination request of the operator.

## Revendications

1. Machine de travail agricole automotrice (1) incluant
- une pluralité de moyens d'éclairage (2)
- un équipement de commande (3) ainsi que
- un dispositif d'entrée (4),
les moyens d'éclairage (2) étant disposés de manière répartie, de façon à être aptes ensemble à éclairer au moins en partie une zone environnante (5) de la machine de travail (1) et/ou des parties de la machine de travail (1),
des entrées relatives à l'activation et/ou la désactivation de moyens d'éclairage (2) pouvant être effectuées par un utilisateur au moyen du dispositif d'entrée (4),
l'équipement de commande (3) étant en liaison active avec le dispositif d'entrée (4), de sorte que des entrées réalisées par l'utilisateur par l'intermédiaire du dispositif d'entrée (4) sont transférables à l'équipement de commande (3),
l'équipement de commande (3) étant en liaison active avec les moyens d'éclairage (2), de sorte que les moyens d'éclairage (2) sont commandables au moyen de l'équipement de commande (3),
**caractérisée en ce que**
le dispositif d'entrée (4) comporte une surface d'utilisation interactive (6) qui est agencée de façon que l'utilisateur entre un souhait d'éclairage au moyen d'une interaction avec une zone sur la surface d'utilisation (6),
l'équipement de commande (3) étant agencé pour convertir le souhait d'éclairage entré en une activation sélective au moins d'un des moyens d'éclairage (2), de façon que le souhait d'éclairage soit converti, dans une mémoire de données de l'équipement de commande (3) étant enregistrées des informations qui associent à chaque moyen d'éclairage (2) une zone d'action dont les moyens d'éclairage respectifs produisent l'éclairage et,
à l'aide de ces informations, l'équipement de commande (3) étant agencé pour mettre en circuit de manière sélective les moyens d'éclairage (2) qui sont aptes à convertir le souhait d'éclairage de l'utilisateur.

2. Machine de travail (1) selon la revendication 1, **caractérisée en ce que** la surface d'utilisation interactive (6) est conçue de façon tactile, en particulier en forme d'écran tactile capacitif.

3. Machine de travail (1) selon une des revendications précédentes, **caractérisée en ce que** le dispositif d'entrée (6) inclut au moins une reconnaissance gestuelle, le dispositif d'entrée (4) comportant de préférence au moins un module de caméra (7) pour détecter des mouvements de mains de l'utilisateur.

4. Machine de travail (1) selon une des revendications précédentes, **caractérisée en ce que** le dispositif d'entrée (4) inclut au moins un moyen (8) de rétroaction optique, de préférence en forme d'un affichage intégré dans la surface d'utilisation (6), le moyen (8) étant agencé pour montrer à l'utilisateur une situation d'éclairage instantanée de la zone environnante (5) de la machine de travail (1) et/ou de la machine de travail (1).

5. Machine de travail (1) selon la revendication 4, **caractérisée en ce que** le moyen (8) de rétroaction optique inclut au moins une représentation de la machine de travail (1) et/ou de la zone environnante (5) de la machine de travail (1) en perspective aérienne, de préférence la représentation montrant une pluralité de zones d'éclairage discrètes (9) de la machine de travail (1) et/ou de la zone environnante (5).

6. Machine de travail (1) selon la revendication 4 ou 5, **caractérisée en ce que** le moyen (8) de rétroaction optique inclut au moins une représentation au moins d'un cône lumineux (10) au moins d'un moyen d'éclairage (2).

7. Machine de travail (1) selon une des revendications précédentes, **caractérisée en ce que** l'équipement de commande (3) est configurable librement pour associer fonctionnellement des moyens d'éclairage (2) au moins à une partie de la zone environnante (5) de la machine de travail (1) et/ou à une partie de la machine de travail (1), de sorte qu'en présence d'un souhait d'éclairage de l'utilisateur relatif à la partie de la zone environnante (5), respectivement à la partie de la machine de travail (1), le moyen d'éclairage respectif (2) soit activé au moyen de l'équipement de commande (3).

8. Machine de travail (1) selon une des revendications précédentes, **caractérisée en ce qu'**au moins un moyen d'éclairage (2) est formé par un projecteur mobile, en particulier apte à pivoter autour d'au moins un axe de pivotement.

9. Machine de travail (1) selon une des revendications précédentes, **caractérisée en ce que** la surface d'utilisation (6) est configurable par l'utilisateur, de préférence un degré de différenciation de possibilités d'entrées étant sélectionnable par l'utilisateur, de préférence au moins entre un degré de différenciation « simple » et un degré de différenciation « complexe ».

10. Machine de travail (1) selon une des revendications précédentes, **caractérisée par** au moins un capteur d'environnement (11) au moyen duquel au moins une partie de la zone environnante (5) de la machine de travail (1) peut être surveillée, en particulier sur le plan des conditions environnementales et/ou d'autres machines de travail.

11. Machine de travail (1) selon la revendication 10, **caractérisée en ce que** le capteur d'environnement (11) est en liaison active avec l'équipement de commande (3), de sorte qu'au moins un moyen d'éclairage (2) est commandable, en particulier désactivable, au moyen de l'équipement de commande (3) en fonction d'un signal du capteur d'environnement (11).

12. Machine de travail (1) selon une des revendications précédentes, **caractérisée en ce que** l'équipement de commande (3) est agencé pour enregistrer le défaut au moins d'un moyen d'éclairage (2) et pour mettre en circuit un autre moyen d'éclairage (2) afin de compenser une puissance d'éclairage ainsi défaillante du moyen d'éclairage respectif (2).

13. Machine de travail (1) selon une des revendications précédentes, **caractérisée en ce que** le dispositif d'entrée (4) inclut au moins un élément d'utilisation (12) qui est configurable librement par l'utilisateur et qui est agencé en coopération avec l'équipement de commande (3) pour entrer, en cas d'utilisation par l'utilisateur, un souhait d'éclairage préalablement défini par l'utilisateur.

14. Procédé de fonctionnement d'une machine de travail (1) selon une des revendications précédentes,
**caractérisé en ce que**
en cas d'entrée d'un souhait d'éclairage, le souhait d'éclairage est transmis à l'équipement de commande (3) au moyen d'une interaction avec la surface d'utilisation interactive (6),
au moyen de l'équipement de commande (3) étant activé, en fonction du souhait d'éclairage, au moins un moyen d'éclairage (2) au moyen duquel le souhait d'éclairage est converti, dans une mémoire de données de l'équipement de commande (3) étant enregistrées des informations qui associent à chaque moyen d'éclairage (2) une zone d'action dont les moyens d'éclairage respectifs produisent l'éclairage,
à l'aide de ces informations, l'équipement de commande (3) étant agencé pour mettre en circuit de manière sélective les moyens d'éclairage (2) qui sont aptes à convertir le souhait d'éclairage de l'utilisateur.
